# EUROPÄISCHE PATENTSCHRIFT

(11) **EP 0 657 684 B1**
(45) Veröffentlichungstag und Bekanntmachung des Hinweises auf die Patenterteilung: **13.08.1997**
(21) Anmeldenummer: 94118832.8
(22) Anmeldetag: 30.11.1994
(51) Int. Cl.: F16L 58/10, B32B 15/06

(54) **Korrosionsbeständiges Bauteil**
Corrosion-resistant construction element
Elément de construction résistant à la corrosion

(30) Priorität: 11.12.1993 DE 4342300
(43) Veröffentlichungstag der Anmeldung: 14.06.1995
(73) Patentinhaber: Keramchemie GmbH, D-56427 Siershahn (DE)
(72) Erfinder: Fenner, Jürgen, Dr., D-56235 Hundsdorf (DE); Schedlitzki, Dietmar, Dr., D-56412 Holler (DE); Hessel, Gerd, D-56244 Ötzingen (DE); Velte, Dieter, D-56235 Ransbach-Baumbach (DE)
(74) Vertreter: Kossobutzki, Walter, Dipl.-Ing.(FH)

(56) Entgegenhaltungen:
- DE-A- 3 422 920
- DE-A- 3 705 432
- DE-A- 3 935 478
- US-A- 4 079 168

## Beschreibung

Die Erfindung bezieht sich auf ein korrosionsbeständiges Bauteil für Abgasreinigungsanlagen, bestehend aus einem metallischen, insbesondere aus Stahl gefertigten Tragkörper, der an seiner nutzungsseitigen Fläche über eine Zwischenschicht aus Kunststoff auf der Basis eines Reaktionsharzes und eine Klebstoffschicht mit einer Gummischicht mit einer Dicke von 2-10 mm verkleidet ist.

In Rauchgasreinigungsanlagen, insbesondere Rauchgasentschwefelungsanlagen, werden korrosionsbeständige Bauteile, wie Behälter, Rohrleitungen und dgl. eingesetzt, die zunächst aus einem aus Stahl gefertigten Tragkörper bestehen. Um diesen aus Stahl gefertigten Tragkörper nun vor Korrosion zu schützen, wird der Stahlkörper an seiner nutzungsseitigen Fläche mit einer ein- oder mehrschichtigen Gummischicht versehen, die aus Weichgummi auf der Basis von Butylkautschuk, Chlorbutylkautschuk oder Brombutylkautschuk besteht, wobei weitere Dautschuke, wie Polychloropren, Acrylnitrilbutadienkautschuk oder Styrol-Butadienkautschuk zugegen sein können. Diese Gummischicht wird in Form von Gummibahnen, die eine Dicke von 2 - 5 mm aufweisen können, aufgebracht, wobei die Gummibahnen entweder bereits vulkanisiert sind oder nach ihrem Aufbringen vulkanisiert werden. Diese Gummischicht schützt das aus Stahl bestehende Bauteil gegen die aggressiven Rauchgase, die Schwefeldioxid, Chlorwasserstoff, Fluorwasserstoff und ähnliches enthalten können, und gegen die Absorberflüssigkeit, die eine Suspension aus gelösten Salzen und Feststoffen ist. Die Gummischicht schützt darüber hinaus aber auch das aus Stahl bestehende Bauteil gegen die abrasiven Feststoffem die in der Absorberflüssigkeit enthalten sind. Ein Nachteil einer solchen Gummischicht wird darin gesehen, daß dieselbe Wasser aus der Absorberflüssigkeit aufnehmen kann, welches nach einer gewissen Betriebszeit durch die Gummischicht diffundiert und sich an der Oberfläche des aus Stahl bestehenden Bauteiles ansammeln kann. Zusammen mit Sauerstoff sowie diffundierenden Salzen und sauren Gasen kann das Wasser dann zu einer Korrosion des Bauteiles führen.

Aus der US-PS 4 079 168 ist ein korrosionsbeständiges Bauteil bekannt, welches sich für Abgasreinigungsanlagen eignet und aus einem metallischen Tragkörper besteht, der an seiner nutzungsseitigen Fläche über eine Zwischenschicht aus Epoxidharz und eine Klebstoffschicht mit einer Gummischicht verkleidet ist.

Der Erfindung liegt deshalb die Aufgabe zugrunde, ein korrosionsbeständiges Bauteil, wie Behälter, Rohrleitungen oder dgl. für Abgasreinigungsanlagen oder dgl. zu schaffen, welches nicht nur eine chemische Beständigkeit gegen Säuren aufweist, sondern bei dem auch sichergestellt ist, daß keine diffundierenden Gase und Salze an den aus Stahl bestehenden Tragkörper gelangen können.

Zur Lösung dieser Aufgabe wird gemäß der Erfindung bei einem Bauteil der eingangs beschriebenen Gattung vorgeschlagen, daß das Reaktionsharz eine Glasübergangstemperatur von mindestens 45°C und eine Dicke von mindestens 0,3 mm aufweist und auf der Gummischicht zusätzlich eine Deckschicht aus einem thermoplastischen Kunststoff mit einer Dicke von mindestens 0,1 mm angeordnet ist.

Bei diesem Bauteil nimmt die Zwischenschicht aus Kunststoff auf der Basis eines Reaktionsharzes in erheblich geringerem Maße Wasser auf und ist dichter gegenüber diffundierenden Gasen und Salzen. Dadurch erhöht sich die Lebensdauer bzw. Standzeit des Bauteiles erheblich. Durch die zusätzliche Deckschicht ist darüber hinaus auch in Bereichen mit besonders hohen Wasserdampfpartialdrücken sichergestellt, daß die Gummischicht und damit auch die Tragschicht vor dem Eindringen des Wasserdampfs geschützt ist.

Weitere Merkmale von besonderen Ausführungsformen eines korrosionsbeständigen Bauteiles gemäß der Erfindung sind in den Ansprüchen 2 - 12 offenbart.

Die Erfindung wird im nachfolgenden anhand eines in einer Zeichnung dargestellten Ausführungsbeispiels näher erläutert. Dabei zeigen
- Fig. 1: einen Schnitt durch die Wandung eines korrosionsbeständigen Bauteiles welches keine Ausführungsform der Erfindung darstellt, aber deren Verständnis erleichtert, und
- Fig. 2: eine Ausgestaltung eines Bauteiles gemäß der Erfindung.

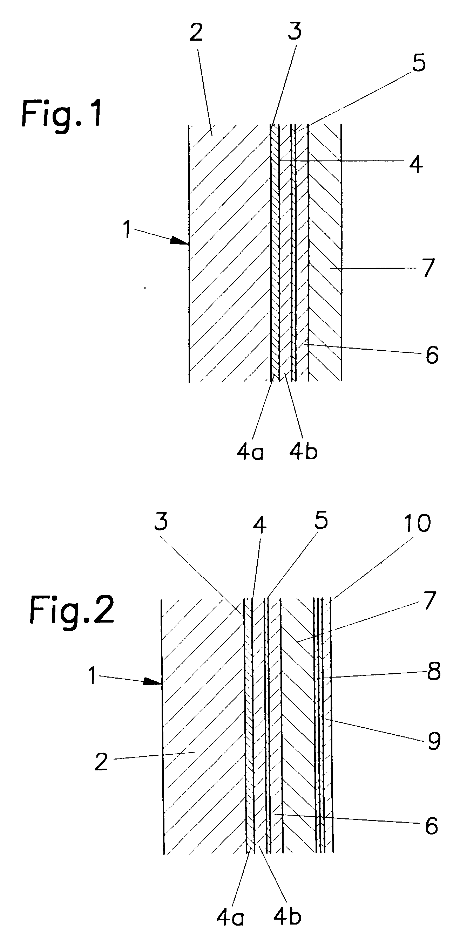

In den Fig. 1 und 2 der Zeichnung ist von einem korrosionsbeständigen Bauteil 1, beispielsweise einem Behälter, nur ein Ausschnitt gezeigt, der zunächst aus einem aus Stahl gefertigten Tragkörper 2 besteht. Die nutzungsseitige Fläche 3 dieses Tragkörpers 2 wurde zunächst durch Strahlen mit mineralischen Strahlmitteln oder Stahlkorn von Rost befreit. Auf diese von Rost befreite Fläche 3 wird dann eine Zwischenschicht 4 aufgebracht, die zunächst aus einer dünnen Schicht 4a in einer Dicke von etwa 0,1 mm aus einer im Spritzverfahren aufgetragenen Vinylesterharzgrundierung auf Novolakbasis besteht. Auf diese Schicht 4a wird dann mindestens eine weitere Schicht 4b aufgespritzt, die aus einem Flakeglas enthaltenden Vinylesterharz auf Novolakbasis besteht. Diese Schicht 4b weist eine Dicke von etwa 0,4 mm auf, wobei bedarfsweise zwei derartige Schichten nacheinander aufgebracht werden können. Sobald die Zwischenschicht 4 bei Umgebungstemperatur ausreichend ausgehärtet ist, wird die freie Oberfläche derselben, beispielsweise durch einen Strahlvorgang, aufgerauht und dann auf dieselbe eine Grundierungsschicht 5 auf der Basis von chlorhaltigen Polymeren und Phenolharz aufgebracht. Diese Grundierungsschicht 5 weist eine Dicke von etwa 0,05 mm auf. Im Anschluß daran wird auf die Grundierungsschicht 5 eine Schicht 6 eines Kontaktklebstoffes in einer Dicke von etwa 0,08 mm aufgetragen, der auf der Basis von Polychloropren/Polyisocyanat besteht.

Auf eine vulkanisierte Butylkautschukbahn 7, die eine Dicke von etwa 4 mm besitzt, wird nun auf einer Seite ebenfalls eine Schicht aus dem gleichen Kontaktklebstoff aufgebracht, die jedoch in der Zeichnung nicht dargestellt ist. Sobald beide Schichten des Kontaktklebstoffes angetrocknet sind, wird die Butylkautschukbahn 7 mit ihrer Klebstoffschicht auf die Kontaktklebstoffschicht 6 aufgelegt und mit Hilfe einer Andrückrolle fest auf die Schicht 6 aus Kontaktklebstoff aufgepreßt. Nach der Aushärtung des Kontaktklebstoffes bei Umgebungstemperatur, die mehrere Tage betragen kann, kann das Bauteil 1 bzw. der Tragkörper 2 mit den aufgebrachten Schichten einer betrieblichen Belastung ausgesetzt werden.

In Abänderung des dargestellten Ausführungsbeispieles gemäß Figur 1 ist es möglich, auf die nutzungsseitige Oberfläche 3 des aus Stahl bestehenden Tragkörpers 2 nach dem Auftragen der Grundierungsschicht 4a eine Schicht aus einem Vinylesterharz auf Bisphenol-A-Basis in einer Dicke von etwa 0,1 mm durch Streichen aufzubringen. Anschließend wird eine etwa 0,9 mm dicke Schicht aus demselben Vinylesterharz durch einen Spachtelvorgang aufgebracht, wobei das Vinylesterharz Flakeglas oder Glimmer und Talkum als Füllstoffe enthalten kann. Nach der Härtung dieser Schicht - ebenfalls bei Umgebungstemperatur - wird die Oberfläche durch einen Schleifvorgang aufgerauht und eine Grundierschicht auf der Basis chlorhaltiger Polymerer und Phenolharz in einer Dicke von 0,05 mm aufgetragen. Auf diese Grundierungsschicht wird dann eine Schicht eines Klebstoffes in einer Dicke von etwa 0,06 mm aufgestrichen, der auf der Basis von Brombutylkautschuk besteht.

Auf eine etwa 4 mm dicke, unvulkanisierte Gummibahn auf Brombutylkautschukbasis wird dann ebenfalls eine Schicht des gleichen Klebstoffes aufgetragen. Sobald beide Schichten aus Klebstoff angetrocknet sind, wird die Gummibahn mit ihrer Klebstoffschicht gegen die andere Klebstoffschicht gelegt und angepreßt. Nach einer Vulkanisation der Gummibahn und der Klebstoffschichten bei einer Temperatur von etwa 60°C - die Vulkanisation kann etwa 2 Wochen dauern - ist der so beschichtete Tragkörper 2 ebenfalls im Betrieb belastbar.

In Abänderung der erläuterten Ausführungsbeispiele ist es möglich, zwei vulkanisierte Gummibahnen mit einer Dicke von jeweils 4 mm nacheinander auf den mit Vinylesterharz beschichteten Tragkörper 2 mit Hilfe der oben beschriebenen Grundierung und des Kontaktklebstoffes auf der Basis von Polychloropren/Polyisocyanat aufzubringen. Dabei ist es auch möglich zwei unvulkanisierte Gummibahnen auf den mit Vinylesterharz beschichteten Tragkörper 2 mit Hilfe der oben beschriebenen Grundierung und des Klebstoffes auf Basis von Brombutylkautschuk aufzubringen.

Das Ausführungsbeispiel der Fig. 2 zeigt ebenfalls einen Tragkörper 2, der in gleicher Weise wie der Tragkörper 2 der Figur 1 beschichtet sein kann. Hier schließt sich jedoch noch eine weitere Beschichtung an. Auf die durch Schleifen aufgerauhte Schicht bzw. Gummibahn 7 aus vulkanisierten Butylkautschuk wird nun eine Schicht 8 des oben erwähnten Kontaktklebstoffes aus Polychloropren/Polyisocyanat in einer Dicke von etwa 0,1 mm aufgestrichen.

Auf die geätzte Seite einer etwa 0,5 mm dicken Bahn 10 aus Polytetrafluorethylen wird eine etwa 0,05 mm dicke Grundierschicht 9 auf der Basis chlorhaltiger Polymerer und Phenolharz aufgebracht und auf die Grundierschicht derselbe Kontaktklebstoff in einer Dicke von etwa 0,07 mm aufgetragen. Nach einer kurzen Trockenzeit der Schichten aus Kontaktklebstoff wird die Bahn 10 auf die Schicht aus Gummi bzw. auf die Gummibahn 7 aufgelegt und angepreßt. Nach einer Aushärtung der Klebstoffschichten, die bei Umgebungstemperatur mehrere Tage betragen kann, ist die Verkleidung des Tragkörpers 2 und damit das korrosionsbeständige Bauteil 1 belastbar.

In Abänderung dieses Ausführungsbeispieles ist es möglich, die Bahn 10 aus Polytetrafluorethylen auch auf etwas anders ausgestaltete und bereits anhand der Fig. 1 erläuterte Schichten aus Gummi bzw. Gummibahnen 7 aufzubringen. Dabei ist es grundsätzlich immer möglich, daß die Gummischicht 7 aus zwei aufeinandergeklebten Gummibahnen bestehen kann. Schließlich ist es auch möglich, für die Schicht 10 eine Bahn aus Polyvinylidenfluorid aufzubringen, die eine Dicke von etwa 1,6 mm besitzt. An ihrer Rückseite weist diese Schicht eine über ein Kunstfasergestrick mit ihr verbundende Weichgummischicht auf. Es ist auch möglich, auf die geätzte Seite des Polytetrafluorethylens eine Weichgummischicht aufzuvulkanisieren und diese Schicht 10 auf die Gummischicht 7 aufzubringen. Bedarfsweise kann die Deckschicht 10 auch aus Polypropylen, das auf der Klebeseite zuvor beflammt wurde, bestehen.

Die beim Aufbringen der Schichten 10 entstehenden Fugen - die Bahnen weisen vorzugsweise eine Größe von 1,0 m bis 1,5 m x 1,0 m bis 3,0 m auf - werden mit einer weichen Reaktionsharzmasse, deren Glasübergangstemperatur unterhalb 20°C liegt, ausgefüllt bzw. verfugt. Dabei eignen sich als Fugenmassen vor allem Massen auf der Basis von hydroxyfunktionellem Polybutadien/Polyisocyanat, Polysulfiden oder Silikon die bei Umgebungstemperatur härten. Es können aber auch Dichtungsmassen auf Butylkautschukbasis angewendet werden.

## Patentansprüche

1. Korrosionsbeständiges Bauteil (1) für Abgasreinigungsanlagen, bestehend aus einem metallischen, insbesondere aus Stahl gefertigten Tragkörper (2), der an seiner nutzungsseitigen Fläche (3) über eine Zwischenschicht (4) aus Kunststoff auf der Basis eines Reaktionsharzes und eine Klebstoffschicht (6) mit einer Gummischicht (7) mit einer Dicke von 2 - 10 mm verkleidet ist,
dadurch gekennzeichnet,
daß das Reaktionsharz eine Glasübergangstemperatur von mindestens 45°C und eine Dicke von mindestens 0,3 mm aufweist und auf der Gummischicht (7) zusätzlich eine Deckschicht (10) aus einem thermoplastischen Kunststoff mit einer Dicke von mindestens 0,1 mm angeordnet ist.

2. Bauteil nach Anspruch 1,
dadurch gekennzeichnet,
daß die Zwischenschicht (4) aus Vinylesterharzen, ungesättigten Polyesterharzen oder Epoxidharzen gebildet ist.

3. Bauteil nach Anspruch 2,
dadurch gekennzeichnet,
daß die Zwischenschicht (4) absperrend wirkende Füllstoffe, wie Flakeglas oder Glimmer, enthält.

4. Bauteil nach einem der Ansprüche 1 bis 3,
dadurch gekennzeichnet,
daß die Zwischenschicht (4) eine Dicke von 0,4 mm bis 1,0 mm aufweist.

5. Bauteil nach Anspruch 1,
dadurch gekennzeichnet,
daß die Deckschicht (10) auf fluorhaltigen Thermoplasten gebildet ist.

6. Bauteil nach Anspruch 5,
dadurch gekennzeichnet,
daß die Deckschicht (10) aus Polytetrafluorethylen, Polyvinylidenfluorid oder Copolymeren des Tetrafluorethylens mit Ethylen oder anderen Monomeren gebildet ist.

7. Bauteil nach Anspruch 1,
dadurch gekennzeichnet,
daß die Deckschicht (10) aus fluorfreien Polymeren gebildet ist.

8. Bauteil nach Anspruch 7,
dadurch gekennzeichnet,
daß die Deckschicht (10) aus Polypropylen, Polyethylen oder Polyvinylchlorid besteht.

9. Bauteil nach einem der Ansprüche 1 oder 5 bis 8,
dadurch gekennzeichnet,
daß die Deckschicht (10) aus durch chemisches Ätzen, Beflammen, Auftrag eines Haftvermittlers oder Aufbringen eines Gewebes oder eines Gestrickes vorbehandelten Thermoplastbahnen besteht.

10. Bauteil nach Anspruch 9,
dadurch gekennzeichnet,
daß die Fugen zwischen den einzelnen Thermoplastbahnen mittels eines Reaktionsharzes mit einer Glasübergangstemperatur vonn unter 20°C ausgefüllt sind.

11. Bauteil nach Anspruch 10,
dadurch gekennzeichnet,
daß die Fugen mit einem Reaktionsharz auf der Basis von Polybutadien/Polyisocyanat, Polysufid oder Silikon ausgefüllt sind.

12. Bauteil nach Anspruch 9,
dadurch gekennzeichnet,
daß die Fugen zwischen den einzelnen Thermoplastbahnen mittels einer Dichtungsmasse auf Butylkautschukbasis ausgefüllt sind.

## Claims

1. Corrosion-resistant component (1) for waste-gas purification plants, consisting of a supporting body (2) made of metal, in particular steel, covered on its working surface (3) by way of an intermediate layer (4) of plastic based on a reactive resin and an adhesive layer (6) with a rubber layer (7) having a thickness of 2 - 10 mm, characterised in that the reactive resin has a glass transition temperature of at least 45°C and a thickness of at least 0.3 mm and an outer layer (10) of a thermoplastic having a thickness of at least 0.1 mm is additionally arranged on the rubber layer (7).

2. Component according to claim 1, characterised in that the intermediate layer (4) is formed of vinyl ester resins, unsaturated polyester resins or epoxy resins.

3. Component according to claim 2, characterised in that the intermediate layer (4) contains fillers with a barrier effect, such as flake glass or mica.

4. Component according to one of claims 1 to 3, characterised in that the intermediate layer (4) has a thickness of 0.4 mm to 1.0 mm.

5. Component according to claim 1, characterised in that the outer layer (10) is formed on fluorine-containing thermoplastics.

6. Component according to claim 5, characterised in that the outer layer (10) is formed of polytetrafluoroethylene, polyvinylidene fluoride or copolymers of tetrafluoroethylene with ethylene or other monomers.

7. Component according to claim 1, characterised in that the outer layer (10) is formed of fluorine-free polymers.

8. Component according to claim 7, characterised in that the outer layer (10) consists of polypropylene, polyethylene or polyvinyl chloride.

9. Component according to one of claims 1 or 5 to 8, characterised in that the outer layer (10) consists of thermoplastic webs pretreated by chemical etching, flame treatment, the application of a bonding agent or the application of woven fabric or a knitted fabric.

10. Component according to claim 9, characterised in that the joins between the individual thermoplastic webs are filled by means of a reactive resin with a glass transition temperature of less than 20°C.

11. Component according to claim 10, characterised in that the joins are filled with a reactive resin based on polybutadiene/polyisocynate, polysulphide or silicone.

12. Component according to claim 9, characterised in that the joins between the individual thermoplastic webs are filled by means of a sealant based on butyl rubber.

## Revendications

1. Composant (1) résistant à la corrosion, pour installations d'épuration des effluents gazeux, constitué d'un corps-support (2) métallique, en particulier fabriqué en acier, qui sur sa surface (3) côté utilisation, et au-dessus d'une couche intermédiaire (4) en un plastique à base d'une résine composite et d'une couche adhésive (6), est revêtu d'une couche de caoutchouc (7) ayant une épaisseur de 2 à 10 mm, caractérisé en ce que la résine composite à une température de transition vitreuse d'au moins 45°C et une épaisseur d'au moins 0,3 mm, et qu'une couche de couverture (10), en un matériau thermoplastique ayant une épaisseur d'au moins 0,1 mm, est en outre disposée sur la couche de caoutchouc (7).

2. Composant selon la revendication 1, caractérisé en ce que la couche intermédiaire (4) est constituée de résines d'esters vinyliques, de résines de polyester insaturé ou de résines époxydiques.

3. Composant selon la revendication 2, caractérisé en ce que la couche intermédiaire (4) contient des matières de charge à effet barrière, telles que le verre en paillettes ou le mica.

4. Composant selon l'une des revendications 1 à 9, caractérisé en ce que la couche intermédiaire (4) a une épaisseur de 0,4 à 1,0 mm.

5. Composant selon la revendication 1, caractérisé en ce que la couche de couverture (10) est constituée de thermoplastiques fluorés.

6. Composant selon la revendication 5, caractérisé en ce que la couche de couverture (10) est constituée de polytétrafluoréthylène, de poly(fluorure de vinylidène) ou de copolymères du tétrafluoréthylène avec l'éthylène ou d'autres monomères.

7. Composant selon la revendication 1, caractérisé en ce que la couche de couverture (10) est constituée de polymères non-fluorés.

8. Composant selon la revendication 7, caractérisé en ce que la couche de couverture (10) est constituée de polypropylène, de polyéthylène ou de poly(chlorure de vinyle).

9. Composant selon l'une des revendications 1 ou 5 à 8, caractérisé en ce que la couche de couverture (10) est constituée de feuilles continues thermoplastiques prétraitées par attaque chimique, par application d'une flamme, par application d'un promoteur d'adhérence ou par application d'un tissu ou d'un tricot.

10. Composant selon la revendication 7, caractérisé en ce que les joints entre les différentes feuilles thermoplastiques sont comblés par une résine composite ayant une température de transition vitreuse inférieure à 20°C.

11. Composant selon la revendication 10, caractérisé en ce que les joints sont comblés par une résine composite à base de polybutadiène/polyisocyanate, polysulfure ou silicone.

12. Composant selon la revendication 9, caractérisé en ce que les joints entre les différentes feuilles thermoplastiques sont comblés à l'aide d'une masse d'étanchéité à base de caoutchouc butyle.
